# EUROPEAN PATENT APPLICATION

(11) **EP 2 887 191 A1**
(43) Date of publication of application: **24.06.2015**
(21) Application number: 13829597.7
(22) Date of filing: 16.08.2013
(51) Int. Cl.: G06F 3/048

(54) **PICTURE DISPLAY PROCESSING METHOD AND DEVICE**

(30) Priority: 16.08.2012 CN 201210292419
(71) Applicant: Xiaomi Inc., Beijing 100085 (CN)
(72) Inventor: XU, Fei, Beijing 100085 (CN); LI, Weixing, Beijing 100085 (CN); WANG, Yahui, Beijing 100085 (CN)
(74) Representative: Hanna, Peter William Derek
(86) International application number: PCT/CN2013/081620
(87) International publication number: WO 2014/026632

(57) **Abstract**

Disclosed is a picture display processing method and a picture display processing device, which are used for improving the picture display effect and efficiency. The method comprises previewing wallpaper along with a sliding gesture from a first boundary of the wallpaper when acquiring a gesture sliding instruction of a user in a first display region under a wallpaper preview application; and previewing the wallpaper along with the sliding gesture from a second boundary of the wallpaper when acquiring a gesture sliding instruction of the user in a second display region under the wallpaper preview application. Further disclosed is a device for implementing the method.

## Description

### TECHNICAL FIELD

The present disclosure generally relates to the technical field of computer and picture processing, and more particularly to a method and an apparatus for processing display of a picture.

### BACKGROUND

With the rapid development of electronic technology, mobile phones, laptops, tablets and other electronic products have become popularized. Among them, electronic products with touch screens are gaining extremely high attention, and becoming mainstream products. As various new electronic products are continuously launched, various value-added services attached to the electronic products become increasingly versatile and personalized. Aesthetic and personalized wallpaper is an indispensible service attached to the electronic products.

Before wallpaper is applied, preview of the wallpaper is a necessary application. In order to provide an excellent display effect of the wallpaper, a size of existing wallpaper in maximum resolution tends to be larger than a size of a display screen or a preview interface. A user needs to zoom out the wallpaper or move the wallpaper to preview the overall wallpaper.

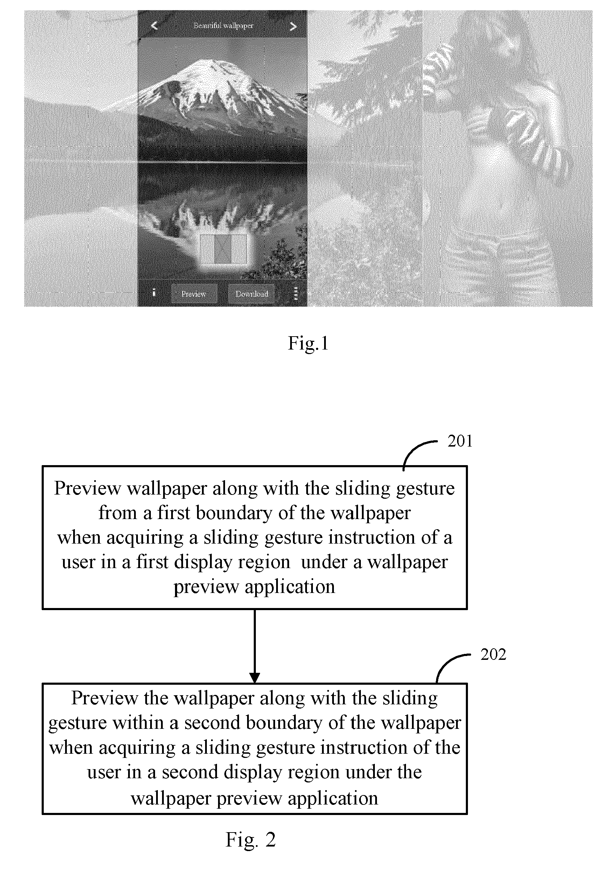

If a user previews the wallpaper in maximum resolution, the user needs to move the current wallpaper from a current position to a boundary with respect to the next wallpaper, before the next wallpaper is previewed, as shown in Fig.1. In such a moving method, the movement distance is relatively larger, which is not convenient for preview of the next wallpaper.

### SUMMARY

Embodiments of the present disclosure provide a method and an apparatus for processing display of a picture, so as to improve the display effect and efficiency of a picture or pictures.

A method for processing display of a picture includes the following steps of: under a wallpaper preview application, when a sliding gesture instruction in a first display region from a user is acquired, previewing wallpaper along with the sliding gesture within a first boundary of the wallpaper; and under the wallpaper preview application, when a sliding gesture instruction from the user in a second display region is acquired, previewing wallpapers along with the sliding gesture within a second boundary of the wallpaper. Therefore, the embodiments provide two types of boundaries. Within a first boundary, it is convenient to implement preview of the overall wallpaper, and within a second boundary, continuous preview of wallpapers may be quickly performed, to improve the display effect and efficiency of a picture or pictures.

Preferably, the sliding gesture instruction in the first display region is an instruction representing preview of the overall wallpaper, and the first boundary is an actual boundary when the wallpaper is displayed in maximum pixels; and the sliding gesture instruction in the second display region is an instruction representing continuous preview of the wallpaper, and the second boundary is a boundary in a preview interface of the wallpaper. Therefore, excellent preview effect and preview efficiency may be achieved both in preview of a single piece of wallpaper and continuous preview of a plurality of pieces of wallpapers.

Preferably, the first display region is a preset region in the preview interface, and the second display region is a region apart from the first display region in the preview interface. Since the gesture operations may be identical or similar in preview of a single piece of wallpaper and continuous preview of a plurality of pieces of wallpaper, in the embodiments, the first display region and the second display region are defined to distinguish the gesture instructions.

Preferably, the step of previewing the wallpaper along with the sliding gesture within the first boundary of the wallpaper, includes: previewing the wallpaper along with the sliding gesture within the first boundary of the wallpaper, according to a ratio of a size of the first display region to a size of the wallpaper; and the step of previewing the wallpaper along with the sliding gesture within the second boundary of the wallpaper, includes: previewing the wallpaper along with the sliding gesture within the second boundary of the wallpaper, according to an actual sliding distance of the gesture. Corresponding processing mode of previewing a picture are adopted according to particular gesture instructions, thereby further improving the preview effect and efficiency.

Or, preferably, the second display region is a preset region in the preview interface, and the first display region is a region apart from the second display region in the preview interface. Since the gesture operations may be identical or similar in preview of a single piece of wallpaper and continuous preview of a plurality of pieces of wallpaper, in the embodiments, the first display region and the second display region are defined to distinguish the gesture instructions.

Preferably, the step of previewing the wallpaper along with the sliding gesture within the first boundary of the wallpaper, includes: previewing the wallpaper along with the sliding gesture within the first boundary of the wallpaper, according to an actual sliding distance of the gesture; and the step of previewing the wallpaper along with the sliding gesture within the second boundary of the wallpaper, includes: moving and switching the previewed wallpaper within the second boundary of the wallpaper according to the sliding gesture. Corresponding processing mode of previewing a picture are adopted according to particular gesture instructions, thereby further improving the preview effect and efficiency.

A method for processing display of a picture includes the following steps of: under a wallpaper preview application, when a gesture instruction representing zoom in of wallpaper is acquired, displaying the wallpaper in maximum pixels; and under a wallpaper preview application, when a gesture instruction representing zoom out of wallpaper is acquired, displaying the wallpaper within the limit of a preview interface; wherein, the gesture instruction representing zoom in of wallpaper is a two-point-outward sliding and the gesture instruction representing zoom out of wallpaper is a two-point-inward sliding. In the embodiments, in zoom in and out, the picture is not processed according to the moving distance and ratio of the gesture instructions, but displaying the wallpaper in maximum pixels of the wallpaper, or limiting the display of the wallpaper within the preview interface, to achieve a fast preview.

Preferably, the step of when a gesture instruction representing zoom out of wallpaper is acquired, displaying the wallpaper within the limit of the preview interface, includes: during occurrence of the gesture instruction representing zoom out of wallpaper, zooming out the displayed wallpaper in proportion to a sliding distance of the gesture; and when the gesture instruction representing zoom out of wallpaper is finished, displaying the wallpaper within the limit of the preview interface.

An apparatus for processing display of a picture, including:
a triggering module configured to, under a wallpaper preview application, acquire a gesture instruction representing zoom in of wallpaper, or acquire a gesture instruction representing zoom out of wallpaper; and
a display module, configured to, when the gesture instruction representing zoom in of wallpaper is acquired, display the wallpaper in maximum pixels; wherein, the gesture instruction representing zoom in of wallpaper is a two-point-outward sliding; and when the instruction representing zoom out of wallpaper is acquired, display the wallpaper within the limit of a preview interface; wherein, the gesture instruction representing zoom out of wallpaper is a two-point-inward sliding.
the display module is configured to, during occurrence of the gesture instruction representing zoom out of wallpaper, zoom out the displayed wallpaper in proportion to the sliding distance of the gesture, and when the gesture instruction representing zoom out of wallpaper is finished, display the wallpaper within the limit of the preview interface.

Other features and advantages of the disclosure will be set forth in the along with specification. Moreover, it will become apparent partly from the specification, or be understood by implementing the disclosure. The objects and other advantages of the disclosure may be realized and achieved by structures specially specified in the written specification, the claims and the accompanied drawings.

Hereinafter, a further detailed description will be given to the technical solution of t the disclosure in reference to the accompanied drawings and the embodiments.

### BRIEF DESCRIPTION OF THE DRAWINGS

The accompanying drawings are used for further illustrating the embodiments of the disclosure, and constitute a part of this specification, and together with the embodiments of the disclosure, serve to explain the present disclosure while do not limit the embodiments of the disclosure. In the drawings:
Fig. 1 is a schematic view showing preview of a picture in the related art;
Fig.2 is a flow chart of a main method for processing display of a picture according to embodiments of the present disclosure;
Fig.3 is a flow chart of a method for processing display of a picture, in case where a first display region is a preset region in a preview interface, and a second display region is a region apart from the first display region in the preview interface, according to embodiments of the present disclosure;
Fig.4 is a schematic view showing each display region and each boundary in a picture according to embodiments of the present disclosure;
Figs.5 and 6 are schematic views showing drag the wallpaper to the left or to the right in the first display region according to embodiments of the present disclosure;
Figs.7 and 8 are schematic views showing drag the wallpaper to the left or to the right in the second display region according to embodiments of the present disclosure;
Fig.9 is a flow chart of a method for processing display of a picture, in case where the second display region is a preset region in the preview interface, and the first display region is a region apart from the second display region in the preview interface, according to embodiments of the present disclosure;
Fig.10A is a flow chart of a method for processing display of a picture according to embodiments of the present disclosure;
Figs.10B and 10C are schematic views respectively showing a picture that have been zoomed in or zoomed out according to embodiments of the present disclosure;
Fig. 11 is a block diagram showing an apparatus according to embodiments of the present disclosure;
Fig.12 is a block diagram showing another apparatus according to embodiments of the present disclosure; and
Fig.13 is a block diagram showing a mobile phone according to embodiments of the present disclosure.

### DETAILED DESCRIPTION

Hereinafter, preferred embodiments of the disclosure will be described in reference to the accompanying drawings. It should be understood that the preferred embodiments described herein are used merely to illustrate and explain rather than to limit the embodiments of the disclosure.

The embodiments provide two types of boundaries. Within a first boundary, it is convenient to implement preview of the overall wallpaper, and within a second boundary, continuous preview of wallpaper may be quickly performed, to improve the display effect and efficiency of a picture.

Referring to Fig.2, a main method for processing display of a picture according to the embodiments includes the following steps.

In step 201, under a wallpaper preview application, when a sliding gesture instruction in a first display region from a user is acquired, wallpaper is previewed along with the sliding gesture within a first boundary of the wallpaper.

In step 202, under a wallpaper preview application, when a sliding gesture instruction from the user in a second display region is acquired, wallpaper is previewed along with the sliding gesture within a second boundary of the wallpaper.

Preferably, the sliding gesture instruction in the first display region is an instruction representing preview of the overall wallpaper, and the first boundary is an actual boundary when the wallpaper is displayed in maximum pixels; the sliding gesture instruction in the second display region is an instruction representing continuous preview of the wallpaper, and the second boundary is a boundary in a preview interface of the wallpaper.

Preferably, the first display region and the second display region may be divided in many manners. For example, the first display region is a preset region in the preview interface, and the second display region is a region apart from the first display region in the preview interface. Alternatively, the second display region is a preset region in the preview interface, and the first display region is a region apart from the second display region in the preview interface.

In case where the first display region is a preset region in the preview interface, and the second display region is a region apart from the first display region in the preview interface, the step of previewing the wallpaper along with the sliding gesture within the first boundary of the wallpaper, includes: previewing the wallpaper along with the sliding gesture within the first boundary of the wallpaper, according to a ratio of the size of the first display region to the size of the wallpaper. And the step of previewing the wallpaper along with the sliding gesture within the second boundary of the wallpaper, includes: previewing the wallpaper along with the sliding gesture within the second boundary of the wallpaper, according to an actual sliding distance of the gesture. This is a preferred implementation, and the wallpaper may be previewed according to other ratios, or without any ratio, and various implementations all apply to the embodiments.

In case where the second display region is a preset region in the preview interface, and the first display region is a region apart from the second display region in the preview interface, the step of previewing the wallpaper along with the sliding gesture within the first boundary of the wallpaper, includes: previewing the wallpaper along with the sliding gesture within the first boundary of the wallpaper, according to an actual sliding distance of the gesture. And the step of previewing the wallpaper along with the sliding gesture within the second boundary of the wallpaper, includes: moving and switching the previewed wallpaper within the second boundary of the wallpaper according to the sliding gesture. This is a preferred implementation, and the wallpaper may be previewed according to other distances, and various implementations are adapted to the embodiments.

Hereinafter, the implementation is described in detail with two typical embodiments.

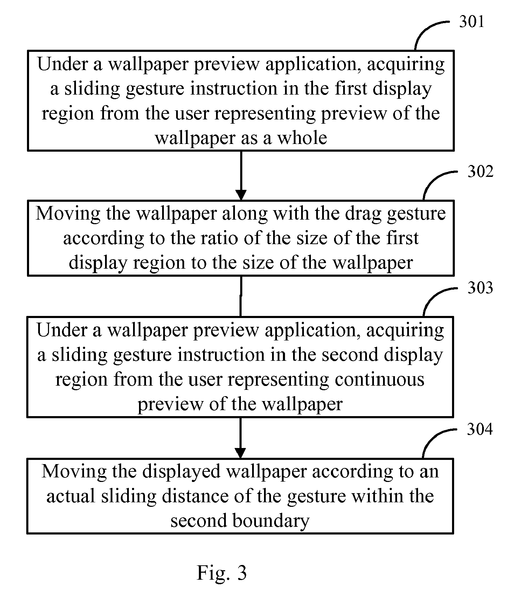

Referring to Fig.3, in case where the first display region is a preset region in the preview interface, and the second display region is a region apart from the first display region in the preview interface, the method for processing display of a picture includes the following steps.

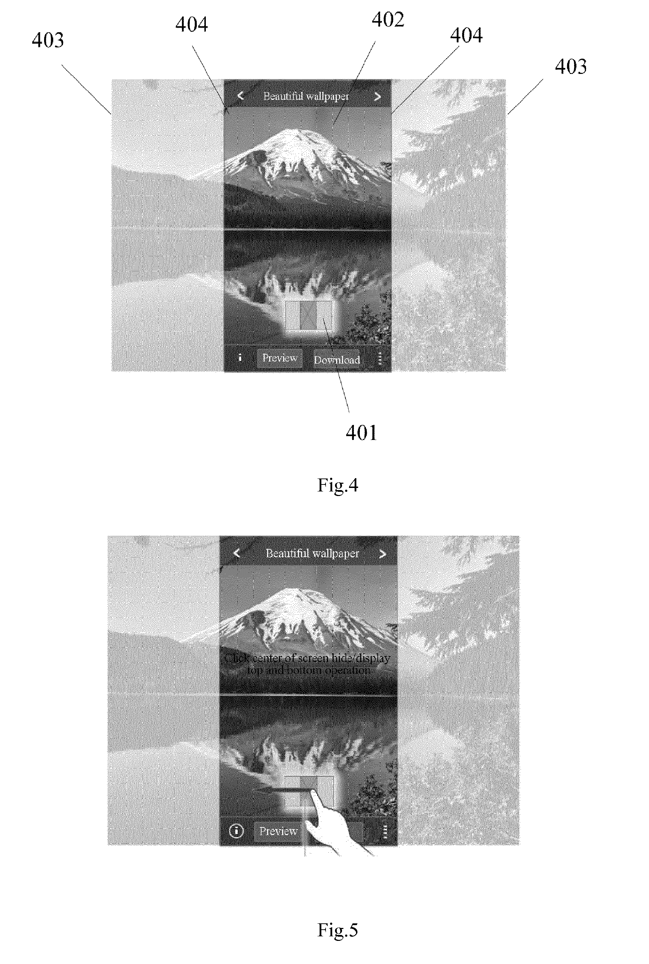

For example, as shown in Fig.4, the first display region is a region indicated as 401, the second display region is a region indicated as the number reference 402, 403 indicates the first boundary, and the number reference 404 indicates the second boundary.

The process of previewing the overall wallpaper is as follows.

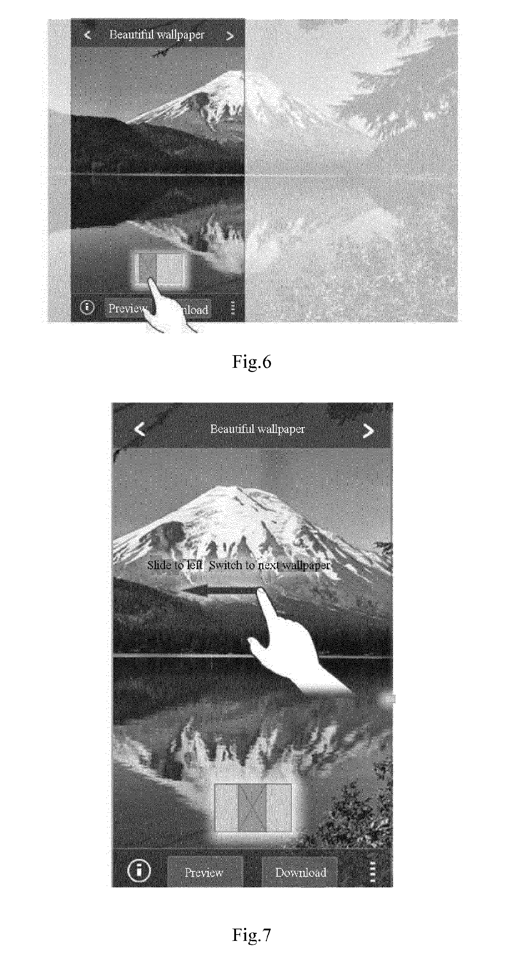

In step 301, under a wallpaper preview application, a sliding gesture instruction from the user in the first display region representing preview of the overall wallpaper is acquired. For example, the gesture instruction is a gesture instruction of a drag to the left or a drag to the right from the user in the first display region, as shown in Figs.5 and 6.

In step 302, the wallpaper is moved along with the drag gesture according to the ratio of the size of the first display region to the size of the wallpaper, and the moving range of the wallpaper is within the first boundary, that is, the actual boundary of the wallpaper displayed in maximum pixels.

The gesture instruction is a drag gesture instruction in the first display region, and is also a continuously triggered instruction. The displayed wallpaper is moved along with each trigger.

The process of continuous previewing the wallpaper is as follows.

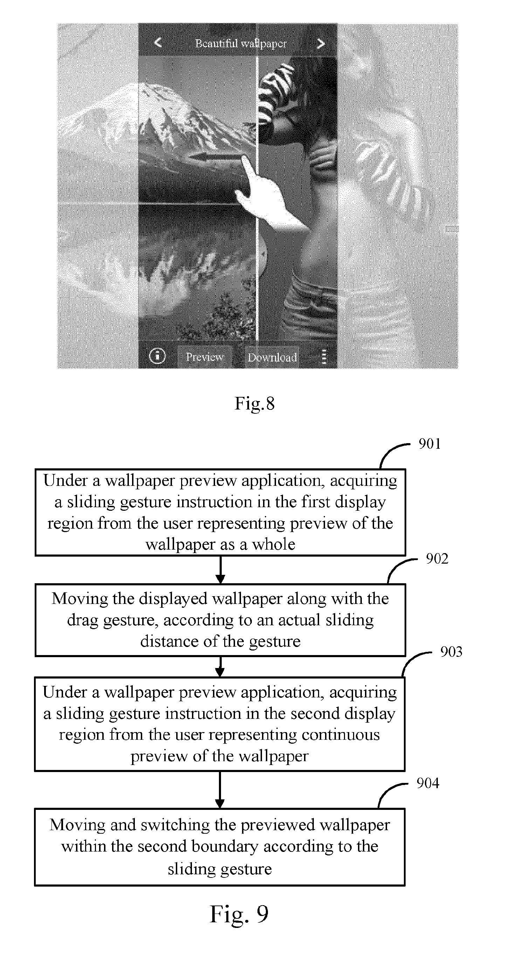

In step 303, under a wallpaper preview application, a sliding gesture instruction from the user in the second display region representing continuous preview of the wallpaper is acquired. For example, the gesture instruction is a gesture instruction of a drag to the left or a drag to the right from the user in the second display region, as shown in Figs.7 and 8.

In step 304, the displayed wallpaper is moved according to an actual sliding distance of the gesture within the second boundary.

The gesture instruction is a sliding gesture instruction in the second display region, and is also a continuously triggered instruction. The displayed wallpaper is moved accompanied by each trigger. Each of the two adjacent pieces of wallpaper has the second boundary, and the display is moved from the current wallpaper to be the next wallpaper.

Referring to Fig.9, in this embodiment, in case where the second display region is a preset region in the preview interface and the first display region is a region apart from the second display region in the preview interface, the method for processing display of a picture includes the following steps.

The process of previewing the overall wallpaper is as follows.

In step 901, under a wallpaper preview application, a sliding gesture instruction from the user in the first display region representing preview of the overall wallpaper is acquired.

In step 902, the displayed wallpaper is moved along with the drag gesture, according to an actual sliding distance of the gesture, and the moving range of the wallpaper is within the first boundary, that is, the actual boundary of the wallpaper displayed in the maximum pixels.

The gesture instruction is a drag gesture instruction in the first display region, and is also a continuously triggered instruction. The displayed wallpaper is moved along with each trigger.

The process of continuous previewing the wallpaper is as follows.

In step 903, under a wallpaper preview application, a sliding gesture instruction from the user in the second display region representing continuous preview of the wallpaper is acquired.

In step 904, the previewed wallpaper is moved and switched according to the sliding gesture within the second boundary.

The gesture instruction is a sliding gesture instruction in the second display region, and is also a single triggered instruction. Upon triggered, the display is moved from the current wallpaper to the next wallpaper, and the two pieces of adjacent wallpaper has the same second boundary.

The above embodiments mainly apply to preview of homepage wallpaper, and for preview of lock screen wallpaper, only the second boundary is adopted.

In addition, currently, zoom in or zoom out of a picture is controlled by simultaneously moving two points, and the ratio of zoom is in accordance with the moving distance between the two points. Thus, zoom of a picture may operate several times. Particularly, under a wallpaper preview application, since the size of the previewed wallpaper is usually of a maximum size or a minimum size, zoom of a picture will operate several times, which is inconvenient for the user.

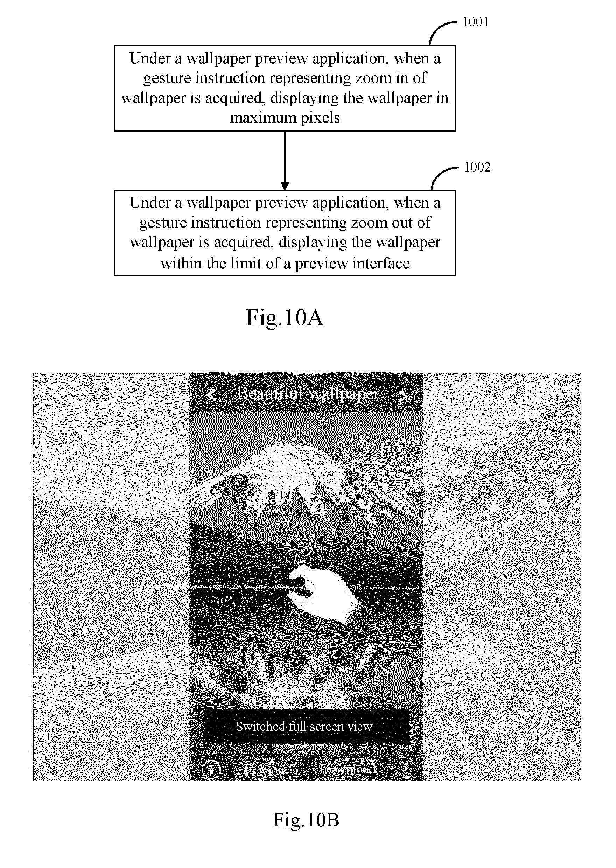

Referring to Fig.10A, the method for processing display of a picture includes the following steps.

In step 1001, under a wallpaper preview application, when a gesture instruction representing zoom in of wallpaper is acquired, the wallpaper is displayed in maximum pixels; wherein, the gesture instruction representing zoom in of wallpaper is a two-point-outward sliding.

In step 1002, under a wallpaper preview application, when a gesture instruction representing zoom out of wallpaper is acquired, the wallpaper is displayed within the limit of the preview interface; wherein, the gesture instruction representing zoom out of wallpaper is a two-point-inward sliding. Preferably, a width of the wallpaper which has been zoomed out corresponds to a width of the preview interface. In addition, during occurrence of the gesture instruction representing zoom out of wallpaper, the displayed wallpaper is zoomed out in proportion to the sliding distance of the gesture, and when the gesture instruction representing zoom out of wallpaper is finished, the wallpaper is displayed within the limit of the preview interface.

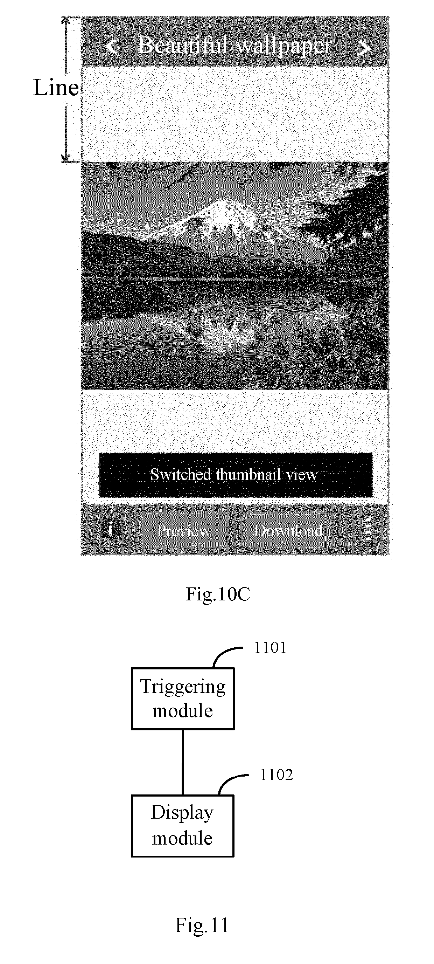

Fig.10B is a schematic view showing the wallpaper that have been zoomed in, and Fig.10C is a schematic view showing the wallpaper that have been zoomed out.

The above are implementation of a method for processing display of a picture, which may be implemented with an apparatus. Hereinafter, an internal structure and functions of the apparatus are described.

Referring to Fig.11, an apparatus for processing display of a picture includes: a triggering module 1101 and a display module 1102.

The triggering module 1101 is configured to, under a wallpaper preview application, acquire a sliding gesture instruction in a first display region by a user, or acquire a sliding gesture from the user instruction in a second display region.

The display module 1102 is configured to, when the sliding gesture instruction from the user in the first display region is acquired, preview wallpaper along with the sliding gesture within a first boundary of the wallpaper; and when the sliding gesture instruction from the user in the second display region is acquired, preview wallpaper along with the sliding gesture within a second boundary of the wallpaper.

Preferably, the sliding gesture instruction in the first display region is an instruction representing preview of the overall wallpaper, and the first boundary is a actual boundary when the wallpaper is displayed in maximum pixels; the sliding gesture instruction in the second display region is an instruction representing continuous preview of the wallpaper, and the second boundary is boundary in a preview interface of the wallpaper.

The first display region is a preset region in the preview interface, and the second display region is a region apart from the first display region in the preview interface. In this case, the display module 1102 is configured to preview wallpaper along with the sliding gesture within the first boundary of the wallpaper, according to a ratio of the size of the first display region to the size of the wallpaper; and preview the wallpaper along with the sliding gesture within the second boundary of the wallpaper, according to a actual sliding distance of the gesture.

The second display region is a preset region in the preview interface, and the first display region is a region apart from the second display region in the preview interface. In this case, the display module 1102 is configured to preview the wallpaper along with the sliding gesture within the first boundary of the wallpaper, according to an actual sliding distance of the gesture; and move and switch the previewed wallpaper according to the sliding gesture within the second boundary of the wallpaper.

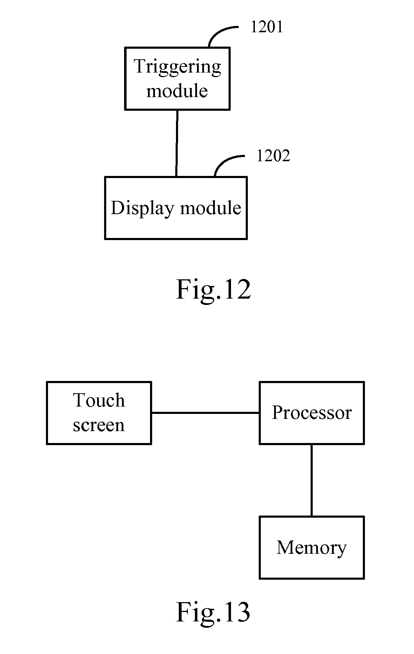

Referring to Fig.12, an apparatus for processing display of a picture includes: a triggering module 1201 and a display module 1202.

The triggering module 1201 is configured to, under a wallpaper preview application, acquire a gesture instruction representing zoom in of wallpaper, or acquire a gesture instruction representing zoom out of wallpaper.

The display module 1202 is configured to, when the gesture instruction representing zoom in of wallpaper is acquired, display the wallpaper in maximum pixels; and when the instruction representing zoom out of wallpaper is acquired, display the wallpaper within the limit of the preview interface; wherein, the gesture instruction representing zoom in of wallpaper is a two-point-outward sliding and the gesture instruction representing zoom out of wallpaper is a two-point-inward sliding. Preferably, the display module 1202 is configured to, during occurrence of the gesture instruction representing zoom out of wallpaper, zoom out the displayed wallpaper in proportion to the sliding distance of the gesture, and when the gesture instruction representing zoom out of wallpaper is finished, display the wallpaper within the limit of the preview interface.

In the embodiments, the triggering module 1101 and the triggering module 1201 may be the same module. The display module 1102 and the display module 1202 may be the same module.

The apparatus may be a device with a touch screen, such as a mobile phone. The mobile phone includes a touch screen, a processor and a memory, as shown in Fig. 13.

The touch screen is configured to acquire various gesture instructions.

The processor is configured to, when the sliding gesture instruction from the user in the first display region is acquired, preview wallpaper along with the sliding gesture within a first boundary of the wallpaper; and when the sliding gesture instruction from the user in the second display region is acquired, preview wallpaper along with the sliding gesture within a second boundary of the wallpaper. In addition, the processor is configured to, when the gesture instruction representing zoom in of wallpaper is acquired, display the wallpaper in maximum pixels; and when the instruction representing zoom out of wallpaper is acquired, display the wallpaper within the limit of the preview interface.

The memory is configured to store data such as various types of wallpaper.

The embodiments of the present disclosure provide two types of boundaries. Within a first boundary, it is convenient to implement preview of the overall wallpaper, and within a second boundary, continuous preview of wallpaper may be quickly performed, thereby improving the display effect and efficiency of a picture. Moreover, the embodiments of the present disclosure provide more than one type of display regions, i.e. the first display region and the second region, thereby providing better processing method for different display regions, and further improving the display effect and efficiency of a picture.

It should be understood by those skilled in the art, that the embodiments of this disclosure may be provided as methods, systems or computer program products. Therefore, the disclosure may be implemented in forms of hardware only, software only, or a combination of software and hardware. Furthermore, the disclosure may be implemented in forms of computer program products executed on one or more computer usable storage media (including but not being limited to disk storage and optical storage, etc.) containing computer usable program codes.

The disclosure is described with reference to the method, the device (system) and the flowchart and/or a block diagram of a computer program product according to the embodiments of the disclosure. It should be understood that each process and/or block in the flowcharts and/or block diagrams, and combinations of processes and/or blocks in the flowcharts and/or block diagrams, may be implemented as computer program instructions. These computer program instructions may be provided to a generate-purpose computer, a special-purpose computer, an embedded processor, or processors of other programmable data processing devices, to produce a machine, such that a device for realizing functions designated in one or more processes in the flowcharts and/or in one or more blocks in the block diagrams, may be produced by instructions executed by a computer or processors of other programmable data processing devices.

These computer program instructions may further be stored in a computer readable storage that can boot a computer or other programmable data processing devices to operate in a specific way, such that a manufactured goods comprising an instruction device may be produced by the instructions stored in the said computer readable storage, and the said instruction device implements the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes implemented by the computer, such that steps for realizing the functions designated in one or more processes in the flowcharts and/or in one or more blocks in the block diagrams may be provided by the instructions executed on the computer or other programmable data processing devices.

Apparently, those skilled in the art may make various modifications and variations to the disclosure without departing the spirit and scope of the disclosure. Thus, the disclosure intends to include these modifications and variations if they belong to the scope of the claims of the disclosure and the equivalent technology thereof.

## Claims

1. A method for processing display of a picture, **characterized by** comprising the following steps of:
when acquiring a sliding gesture instruction from the user in a first display region, previewing wallpaper along with the sliding gesture within a first boundary of the wallpaper, under a preview wallpaper application; and
when acquiring a sliding gesture instruction from the user in a second display region, previewing the wallpaper along with the sliding gesture within a second boundary of the wallpaper, under the preview wallpaper application.

2. The method of claim 1, **characterized in that**, the sliding gesture instruction in the first display region is an instruction representing preview of the wallpaper as a whole, and the first boundary is an actual boundary when the wallpaper is displayed in maximum pixels; and
the sliding gesture instruction in the second display region is an instruction representing continuous preview of the wallpaper, and the second boundary is a boundary in a preview interface of the wallpaper.

3. The method of claim 1, **characterized in that**, the first display region is a preset region in a preview interface, and the second display region is a region apart from the first display region in the preview interface.

4. The method of claim 3, **characterized in that**, the step of previewing the wallpaper along with the sliding gesture within the first boundary of the wallpaper, comprises:
previewing the wallpaper along with the sliding gesture within the first boundary of the wallpaper, according to a ratio of a size of the first display region to a size of the wallpaper; and
the step of previewing wallpaper along with the sliding gesture within the second boundary of the wallpaper, comprises: previewing the wallpapers along with the sliding gesture within the second boundary of the wallpapers, according to an actual sliding distance of the gesture.

5. The method of claim 1, **characterized in that**, the second display region is a preset region in the preview interface, and the first display region is a region apart from the second display region in the preview interface.

6. The method of claim 5, **characterized in that**, the step of previewing the wallpaper along with the sliding gesture within the first boundary of the wallpaper, comprises:
previewing the wallpaper along with the sliding gesture within the first boundary of the wallpaper, according to an actual sliding distance of the gesture; and
the step of previewing the wallpapers along with the sliding gesture within the second boundary of the wallpaper, comprises: moving and switching the previewed wallpapers within the second boundary of the wallpapers, according to the sliding gesture.

7. A method for processing display of a picture, **characterized by** comprising the following steps of:
displaying the wallpaper in maximum pixels when acquiring a gesture instruction representing zoom in of wallpaper, under a wallpaper preview application; wherein, the gesture instruction representing zoom in of wallpaper is a two-point-outward sliding; and
displaying the wallpaper within the limit of a preview interface when acquiring a gesture instruction representing zoom out of wallpaper, under the wallpaper preview application; wherein, the gesture instruction representing zoom out of wallpaper is a two-point-inward sliding.

8. The method of claim 7, **characterized in that**, the step of displaying the wallpaper within the limit of a preview interface when acquiring a gesture instruction representing zoom out of wallpaper, comprises:
during occurrence of the gesture instruction representing zoom out of wallpaper, zooming out the displayed wallpaper in proportion to a sliding distance of the gesture; and
when the gesture instruction representing zoom out of wallpaper is finished, displaying the wallpaper within the limit of the preview interface.

9. An apparatus for processing display of a picture, **characterized by** comprising:
a triggering module configured to acquire a sliding gesture instruction in a first display region from a user, or acquire a sliding gesture instruction in a second display region from the user, under a wallpaper preview application; and
a display process module configured to, when the sliding gesture instruction in the first display region from the user is acquired, preview wallpaper along with the sliding gesture within a first boundary of the wallpaper; and when the sliding gesture instruction in the second display region from the user is acquired, preview wallpapers along with the sliding gesture within a second boundary of the wallpapers.

10. The apparatus of claim 9, **characterized in that**, the sliding gesture instruction in the first display region is an instruction representing preview of an overall wallpaper, and the first boundary is an actual boundary when the wallpaper is displayed in maximum pixels; and
the sliding gesture instruction in the second display region is an instruction representing continuous preview of wallpaper, and the second boundary is a boundary in a preview interface of the wallpaper.

11. The apparatus of claim 9, **characterized in that**, the first display region is a preset region in a preview interface, and the second display region is a region apart from the first display region in the preview interface.

12. The apparatus of claim 11, **characterized in that**, the display process module is configured to preview wallpaper along with the sliding gesture within the first boundary of the wallpaper, according to a ratio of a size of the first display region to a size of the wallpaper; and preview wallpapers along with the sliding gesture within the second boundary of the wallpapers, according to an actual sliding distance of the gesture.

13. The apparatus of claim 9, **characterized in that**, the second display region is a preset region in a preview interface, and the first display region is a region apart from the second display region in the preview interface.

14. The apparatus of claim 13, **characterized in that**, the display process module is configured to preview the wallpaper along with the sliding gesture within the first boundary of the wallpaper according to an actual sliding distance of the gesture, and move and switch the previewed wallpapers according to the sliding gesture within the second boundary of the wallpapers.

15. An apparatus for processing display of a picture, **characterized by** comprising:
a triggering module configured to acquire a gesture instruction representing zoom in of wallpaper, or acquire a gesture instruction representing zoom out of wallpaper, under a wallpaper preview application; and
a display process module configured to, when the gesture instruction representing zoom in of wallpaper is acquired, display the wallpaper in maximum pixels, and when the instruction representing zoom out of wallpaper is acquired, display the wallpaper within the limit of a preview interface; wherein, the gesture instruction representing zoom in of wallpaper is a two-point-outward sliding and the gesture instruction representing zoom out of wallpaper is a two-point-inward sliding.

16. The apparatus of claim 15, **characterized in that**, the display process module is configured to, during occurrence of the gesture instruction representing zoom out of wallpaper, zoom out the displayed wallpaper in proportion to the sliding distance of the gesture, and when the gesture instruction representing zoom out of wallpaper is finished, display the wallpaper within the limit of the preview interface.
